# FASCICULE DE BREVET EUROPEEN

(11) **EP 0 488 957 B1**
(45) Date de publication et mention de la délivrance du brevet: **31.08.1994**
(21) Numéro de dépôt: 91810919.0
(22) Date de dépôt: 26.11.1991
(51) Int. Cl.: D05B 27/02, D05B 27/24, F16C 11/04

(54) **Dispositif d'articulation entre deux leviers**
Gelenkvorrichtung zwischen zwei Hebeln
Articulation device between two levers

(30) Priorité: 29.11.1990 CH 3779/90
(43) Date de publication de la demande: 03.06.1992
(73) Titulaire: MEFINA S.A., CH-1701 Fribourg (CH)
(72) Inventeur: Jimenez, Antonio, CH-1217 Meyrin (CH); Deplante, Patrice, F-74100 Annemasse (FR)

(56) Documents cités:
- EP-A- 0 374 090
- DE-A- 1 425 957
- DE-C- 177 846
- DE-U- 8 613 993
- US-A- 3 036 536
- US-A- 4 541 354

## Description

La présente invention se rapporte à un dispositif d'articulation entre deux leviers dans lequel une extrémité d'un premier levier présente une fourche recevant entre ses branches une extrémité d'un second levier.

Lorsque deux leviers sont articulés l'un à l'autre sans roulement à billes, il est très difficile d'avoir à la fois un mouvement libre entre eux sans la présence d'aucun jeu. Ceci est vrai en particulier pour des leviers travaillant à des fréquences élevées, tels que les leviers d'un mécanisme d'entraînement du matériau à coudre d'une machine à coudre (voir par exemple le document EP.A.0 374 090). Or, dans un tel mécanisme travaillant selon un mouvement alternatif de fréquence élevée, le jeu entre les leviers articulés engendre du bruit et est, par la même occasion, une source d'imprécision de la couture.

Dans un tel mécanisme, la griffe destinée à entraîner le tissu est généralement animée d'un mouvement combiné selon deux directions orthogonales qui lui confèrent une trajectoire elliptique. A cet effet, cette griffe est fixée à une pièce en forme d'étrier dont les extrémités libres des deux branches sont articulées à deux leviers parallèles pour commander le déplacement selon l'une de ces directions. L'alignement des axes d'articulation des deux branches de l'étrier pose un problème de fabrication délicat, le perçage des deux branches devant être réalisé en une seule opération. En outre, si cette pièce en forme d'étrier est directement venue de moulage, telle une pièce en fonte injectée, le fait de la percer libère des tensions qui rendent encore plus difficile l'alignement des perçages.

Le but de la présente invention est de remédier, au moins en partie, aux inconvénients susmentionnés.

A cet effet, la présente invention a pour objet un dispositif d'articulation entre deux leviers selon la revendication 1.

Par sa conception, un tel dispositif permet d'utiliser directement des pièces de fonderie, en particulier en fonte injectée, sans aucun usinage préalable, entraînant de ce fait une sensible diminution du coût de fabrication. Bien entendu ces pièces peuvent aussi être obtenues en matière plastique moulée ou injectée.

D'autres avantages apparaîtront dans la description qui va suivre et dans le dessin annexé qui illustre, schématiquement et à titre d'exemple, une forme d'exécution du dispositif d'articulation objet de la présente invention.

La figure 1 est une vue de dessus d'un mécanisme d'entraînement du tissu pour machine à coudre muni de ce dispositif d'articulation.

La figure 2 est une vue en élévation selon la ligne II-II de la figure 1.

La figure 3 est une vue en coupe selon la ligne III-III de la figure 2.

La figure 4 est une vue en élévation selon la ligne IV-IV de la figure 2.

La figure 5 est une vue partielle en coupe à plus grande échelle selon la ligne V-V de la figure 2.

La figure 6 est une vue en perspective éclatée de la figure 5.

Le mécanisme illustré à titre d'exemple, muni du dispositif d'articulation entre deux leviers, objet de l'invention, est ici un mécanisme d'entraînement du tissu d'une machine à coudre. Etant donné que ce mécanisme ne fait pas à proprement parler partie de la présente invention, mais qu'il ne sert qu'à montrer un exemple d'application, on ne le décrira pas en entier dans la mesure où cette description n'est pas nécessaire à la compréhension de l'invention.

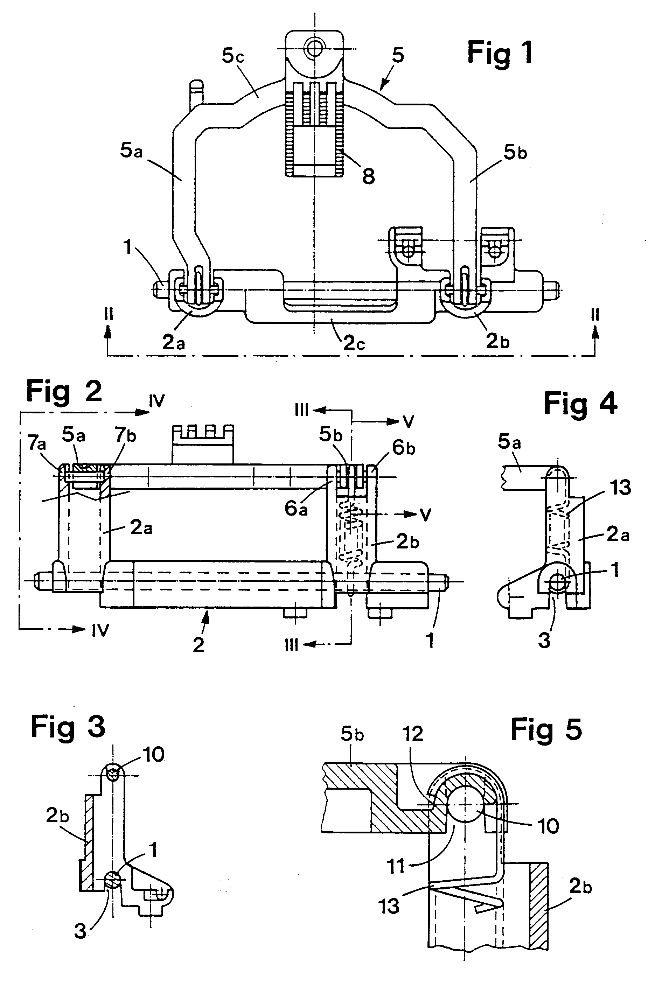

Les figures 1 à 4 illustrent une tige 1 destinée à relier le mécanisme à un bâti (non représenté) et sur laquelle un levier 2 est monté pivotant. Ce levier comprend deux bras 2a, 2b, solidaires d'un élément de liaison 2c muni d'un évidement longitudinal 3 ouvert latéralement pour recevoir la tige 1. Les extrémités libres des bras 2a et 2b sont chacune articulées à l'extrémité libre des deux bras 5a, 5b d'une pièce en forme d'étrier 5 dont le bras médian 5c porte une griffe 8 destinée à entraîner par pas successifs le tissu à coudre dans un sens déterminé.

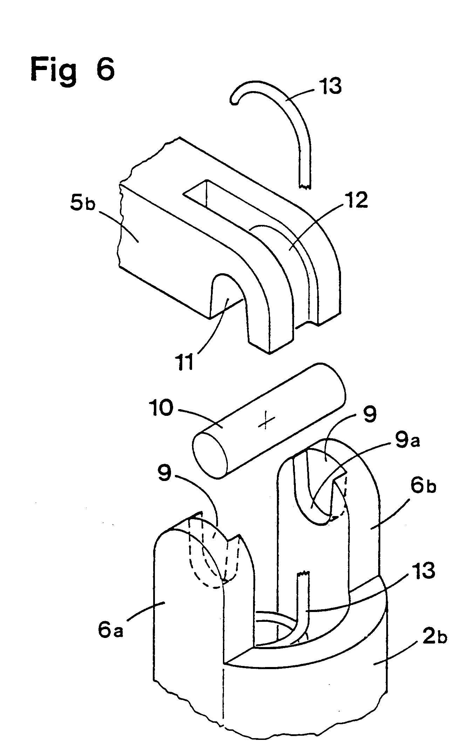

L'articulation objet de la présente invention est illustrée à plus grande échelle par les figures 5 et 6. La figure 2 montre que les extrémités des bras 2a et 2b articulées à la pièce en forme d'étrier 5, se terminent par des fourches dont les branches sont désignées par 7a, 7b, respectivement 6a, 6b, recevant entre elles les bras 5a, respectivement 5b, de l'étrier 5. Comme illustré par les figures 5 et 6, chaque branche 6a, 6b, 7a, 7b dont seule les branches 6a, 6b sont illustrées par la figure 6, présente un évidement 9 ménagé sur sa face interne. Cet évidement 9 est parallèle à cette face interne de la branche 6a, 6b et s'étend dans le sens longitudinal de cette branche débouchant ainsi à son extrémité pour ménager un passage pour recevoir un pivot 10. Comme illustré par la figure 6, de préférence, ce dégagement ne traverse pas toute l'épaisseur des branches 6a, 6b, afin de réserver des faces de butée axiale pour retenir le pivot 10. Le fond de la face latérale 9a de chaque évidement 9 sert de surface de pivotement au pivot 10.

L'extrémité du bras 5b de la pièce en forme d'étrier 5 insérée entre les branches 6a, 6b de la fourche présente un évidement latéral 11 destiné à s'engager sur le pivot 10. La partie de l'extrémité du bras 5b, opposée à la face latérale dans laquelle débouche l'évidement latéral 11, présente une rainure semi-circulaire 12 concentrique à l'axe du pivot 10. Cette rainure 12 sert à l'accrochage de l'une des extrémités d'un ressort de traction à boudin 13. Pour permettre de loger ce ressort à boudin 13, les bras 2a et 2b du levier 2 présentent une section semi-annulaire comme on le voit en particulier sur la figure 6, ménageant ainsi un canal ouvert latéralement pour le passage du ressort à boudin 13, dont l'autre extrémité est crochée sur la tige 1 passant dans l'évidement longitudinal 3 de l'élément de liaison 2c solidaire des leviers 2a et 2b.

Comme on peut le constater, toutes les surfaces de pivotement sont formées par des faces semi-circulaires auxquelles les pivots peuvent accéder latéralement. De même, la section droite des leviers 2a et 2b est semi-annulaire, de sorte que ces leviers peuvent être directement obtenus par moulage, notamment en fonte injectée, sans nécessiter aucun usinage ultérieur. Ce dispositif d'articulation entraîne donc une simplification et une réduction notable des opérations de fabrication tout en permettant d'obtenir une précision supérieure à celle que l'on pouvait avoir avec une articulation traditionnelle. En outre, grâce au fait que les leviers sont appliqués élastiquement contre le pivot, tout jeu consécutif à l'usure est automatiquement rattrapé, de sorte que cette articulation fonctionnera sans bruit et avec précision malgré l'usure.

## Revendications

1. Dispositif d'articulation entre deux leviers (2a,5a; 5a,5b), dans lequel une extrémité d'un premier levier (2a,2b) présente une fourche recevant entre ses branches (6a,6b;7a,7b) une extrémité d'un second levier (5b), caracterisé par le fait qu'un évidement (9) est ménagé sur chacune desdites branches (6a,6b) dans le sens longitudinal de cette branche, débouchant ainsi à son extrémité pour former un passage d'introduction latéral de l'extrémité d'un pivot (10) entre lesdites branches, le fond de la face latérale (9a) de chaque évidement (9) formant une surface de palier de l'une des extrémités dudit pivot (10), que l'extrémité adjacente du second levier (5a,5b) présente un évidement (11) s'ouvrant latéralement sur une de ses faces pour s'engager sur la portion de pivot (10) s'étendant entre les branches (6a,6b;7a,7b) de la fourche et que des moyens élastiques (13) servent à appliquer à l'extrémité de ce second levier (5a,5b) une pression latérale dirigée pour maintenir constamment en contact l'un contre l'autre, le pivot (10) et lesdites surfaces de palier, d'une part, le fond de l'évidement (11) du second levier (5a,5b) et le pivot (10), d'autre part.

2. Dispositif d'articulation selon la revendication 1, caractérisé par le fait que les évidements (9) formés aux extrémités des branches (6a, 6b) de ladite fourche sont ménagés sur la face interne de chacune de ces branches, parallèlement à cette face, pour ménager des surfaces de butée axiales pour ledit pivot (10).

3. Dispositif d'articulation selon la revendication 1, caractérisé par le fait que l'extrémité du second levier (5a,5b) présente, des moyens (12) servant à l'accrochage de l'extrémité d'un ressort de traction à boudin (13) dont l'autre extrémité est solidaire du premier levier (2b).

4. Dispositif selon la revendication 3, caractérisé par le fait que la partie de l'extrémité du second levier (5a,5b) opposée à la face latérale dans laquelle débouche ledit évidement (11) présente, dans sa partie médiane, une rainure (12) concentrique à l'axe dudit pivot (10) et servant à l'accrochage de l'extrémité dudit ressort de traction à boudin (13).

5. Dispositif d'articulation selon la revendication 3, caractérisé par le fait que la seconde extrémité dudit ressort de traction (13) est crochée autour d'un second pivot (1), parallèle au premier, engage latéralement dans un évidement (3) dont le fond forme la surface de palier de ce second pivot (1), ménagé à l'autre extrémité dudit premier levier (2a,2b).

6. Dispositif d'articulation selon l'une des revendications précédentes, caractérisé par le fait que chacun desdits leviers est venu directement de moulage avec ses surfaces de palier.

## Claims

1. Pivotable linkage device between two levers (2a, 5a; 5a, 5b), in which one end of a first lever (2a, 2b) has a fork which between its tines (6a, 6b; 7a, 7b) receives one end of a second lever (5b), characterized in that a recess (9) is made on each of said tines (6a, 6b) in the longitudinal direction of this tine, thus opening out at its end to form a lateral passage for the introduction of the end of a pivot pin (10) between said tines, the bottom of the side face (9a) of each recess (9) forming a bearing surface for one of the ends of said pivot pin (10), in that the adjacent end of the second lever (5a, 5b) has a recess (11) opening laterally on one of its faces for engagement on the portion of the pivot pin (10) extending between the tines (6a, 6b; 7a, 7b) of the fork, and in that resilient means (13) serve to exert upon the end of this second lever (5a, 5b) a lateral pressure oriented to keep the pivot pin (10) and said bearing surfaces, on the one hand, and the bottom of the recess (11) of the second lever (5a, 5b) and the pivot pin (10) on the other hand, constantly in contact with one another.

2. Pivotable linkage device according to Claim 1, characterized in that the recesses (9) formed at the ends of the tines (6a, 6b) of said fork are made on the inner face of each of these tines, parallel to this face, to form axial stop faces for said pivot pin (10).

3. Pivotable linkage device according to Claim 1, characterized in that the end of the second lever (5a, 5b) has means (12) for attaching the end of an elastic draw spring (13), the other end of which is integral with the first lever (2b).

4. Pivotable linkage device according to Claim 3, characterized in that the portion of the end of the second lever (5a, 5b) opposite the side face into which the said recess (11) opens out has, in its middle portion, a groove (12) which is concentric with the axis of said pivot pin (10) and serving to attach the end of said elastic draw spring (13).

5. Pivotable linkage device according to Claim 3, characterized in that the second end of the said elastic draw spring (13) is attached about a second pivot pin (1), parallel to the first one and laterally engaging a recess (3) the bottom of which forms the bearing surface of this second pivot pin (1), formed at the other end of said first lever (2a, 2b).

6. Pivotable linkage device according to one of the preceding claims, characterized in that each of said levers is cast integrally with its bearing surfaces.

## Patentansprüche

1. Gelenkvorrichtung zwischen zwei Hebeln (2a, 5a; 2b, 5a), bei denen ein Ende eines ersten Hebels (2a, 2b) eine Gabel bildet, die zwischen ihren Schenkein (6a, 6b; 7a, 7b) ein Ende eines zweiten Hebels (5b) aufnimmt,
dadurch **gekennzeichnet,** daß eine Aussparung (9) an jedem der Schenkel (6a, 6b) in Längsrichtung des Schenkels eingearbeitet ist, die an ihrem Ende ausmündet, um einen seitlichen Gang zum Einführen des Endes einer Schwenkachse (10) zwischen den Schenkein zu bilden, wobei der Boden der Seitenfläche (9a) jeder Aussparung (9) eine Lageroberfläche eines der Enden der Schwenkachse (10) bildet; daß das benachbarte Ende des zweiten Hebels (5a, 5b) eine Aussparung (11) besitzt, die seitlich an einer seiner Flächen mündet, um den Abschnitt der Schwenkachse (10) zu umgreifen, der sich zwischen den Schenkeln (6a, 6b; 7a, 7b) der Gabel erstreckt; und daß elastische Mittel (13) dazu dienen, auf das Ende des zweiten Hebels (5a, 5b) einen gerichteten seitlichen Druck auszuüben, um die Schwenkachse (10) und die Lagerflächen einerseits, den Boden der Aussparung (11) des zweiten Hebels (5a, 5b) und die Schwenkachse (10) andererseits dauernd aneinander in Berührung zu halten.

2. Gelenkvorrichtung nach Anspruch 1,
dadurch **gekennzeichnet,** daß die an den Enden der Schenkel (6a, 6b) der Gabel gebildeten Aussparungen (9) auf der Innenfläche jedes der Schenkel parallel zu dieser Fläche ausgebildet sind, um axiale Anschlagoberflächen für die Schwenkachse (10) zu schaffen.

3. Gelenkvorrichtung nach Anspruch 1,
dadurch **gekennzeichnet,** daß das Ende des zweiten Hebels (5a, 5b) Mittel (12) aufweist, die zum Einhaken des Endes einer Schraubenzugfeder (13) dienen, deren anderes Ende fest mit dem ersten Hebel (2b) verbunden ist.

4. Gelenkvorrichtung nach Anspruch 3,
dadurch **gekennzeichnet,** daß der Abschnitt des Endes des zweiten Hebels (5a, 5b), der der Seitenfläche gegenüberliegt, in die die Aussparung (11) mündet, in seinem mittleren Abschnitt eine Nut (12) aufweist, die konzentrisch zur Achse der Schwenkachse (10) verläuft und zum Einhaken des Endes der Schraubendruckfeder (13) dient.

5. Gelenkvorrichtung nach Anspruch 3,
dadurch **gekennzeichnet,** daß das zweite Ende der Zugfeder (13) um eine zweite Schwenkachse (1) gehakt ist, die parallel zur ersten verläuft und seitlich in einer Aussparung (3) gefaßt ist, deren Boden die Lageroberfläche er zweiten Schwenkachse (1) bildet und am anderen Ende des ersten Hebels (2a, 2b) eingearbeitet ist.

6. Gelenkvorrichtung nach einem der vorhergehenden Ansprüche,
dadurch **gekennzeichnet,** daß jeder der genannten Hebel mit seinen Lageroberflächen direkt aus der Formarbeit hervorgegangen ist.
